# FASCICULE DE BREVET EUROPEEN

(11) **EP 2 899 724 B1**
(45) Date de publication et mention de la délivrance du brevet: **14.12.2016**
(21) Numéro de dépôt: 15151770.3
(22) Date de dépôt: 20.01.2015
(51) Int. Cl.: G21F 5/06, G21G 1/02, G21G 1/08, G21K 5/08

(54) **Dispositif pour l'irradiation d'echantillons dans le coeur ou en peripherie du coeur d'un reacteur**
Vorrichtung zur Bestrahlung von Proben im Kern oder in der Peripherie des Kerns eines Reaktors
Device for irradiating samples in the core or periphery of the core of a reactor

(30) Priorité: 22.01.2014 FR 1450519
(43) Date de publication de la demande: 29.07.2015
(73) Titulaire: Commissariat à l'Énergie Atomique et aux Énergies Alternatives, 75015 Paris (FR)
(72) Inventeur: Moulin, Damien, 84240 La Tour D'Aigues (FR); Christin, Sébastien, 01150 Leyment (FR)
(74) Mandataire: Brevalex

(56) Documents cités:
- EP-A2- 2 428 966
- JP-A- 2000 111 690
- JP-A- 2005 003 458

## Description

### DOMAINE TECHNIQUE ET ART ANTÉRIEUR

La présente invention se rapporte à un dispositif pour l'irradiation de matériaux dans le coeur ou en périphérie du coeur d'un réacteur nucléaire, plus particulièrement dans un réacteur nucléaire de recherche.

Afin de pouvoir faire des expériences sur des matériaux ou échantillons pour observer leur comportement aux irradiations, il est nécessaire de pouvoir les disposer dans un coeur ou en périphérie du coeur d'un réacteur nucléaire de recherche.

On souhaite donc disposer d'un dispositif permettant d'introduire un (ou plusieurs) échantillon(s) à irradier dans la zone du réacteur expérimental où le flux neutronique est le plus élevé, correspondant au milieu des assemblages combustibles du réacteur. Dans cette zone, les échantillons et les structures sous irradiation sont soumis aux rayonnements nucléaires (gamma et neutrons) provenant du coeur du réacteur, ce qui provoque leur échauffement.

Ce dispositif expérimental voit des températures élevées et une pression élevée.

Or il est difficile de choisir des matériaux capables à la fois de tenir une pression élevée et une température élevée, par exemple de l'ordre de 800°C. Ceci est d'autant plus difficile dans les conditions d'irradiation de l'expérimentation.

Par exemple, les aciers austénitiques voient leur durée de vie significativement réduite pour des températures supérieures à 450°C. Par exemple, pour l'acier austénitique X2CrNiMo17-12-2, la durée sous irradiation dans un coeur de réacteur de recherche (typiquement avec un endommagement de 12 dpa/an) est de 4,4 ans en dessous de 375°C et de 2 ans au-dessus de 425°C. De même, le fluage et le vieillissement du matériau sont négligeables quelque soit la durée en dessous de 450°C, mais ils deviennent significatifs dès 2000 heures à 525°C.

Les documents JP 2000 111690 A, EP 2 428 966 A2 et JP 2005 003458 A divulguent des exemples des dispositifs d'irradiation d'échantillons selon l'art antérieure.

### EXPOSÉ DE L'INVENTION

C'est par conséquent un but de la présente invention d'offrir un dispositif expérimental pour l'irradiation d'échantillons dans un réacteur permettant aux échantillons d'atteindre des températures élevées tout en assurant une tenue mécanique de l'ensemble pour satisfaire les règles de sûreté.

Le but précédemment énoncé est atteint par un dispositif pour irradier des échantillons comportant une chambre délimitée par une enceinte à double enveloppe, la chambre contenant un récipient destiné à contenir un fluide caloporteur, un support d'échantillons pénétrant dans le récipient de sorte que les échantillons soient plongés dans le fluide caloporteur, le récipient étant apte à tenir des températures élevées et l'intérieur et l'extérieur du récipient étant en communication fluidique de sorte que la même pression règne entre l'intérieur du récipient où se situe le porte-échantillons et l'extérieur du récipient.

Grâce à l'invention, l'intérieur et l'extérieur du récipient étant à équipression, le matériau formant le récipient n'est pas destiné à supporter une pression élevée, le ou les matériaux le formant peut ou peuvent donc être choisis pour tenir des hautes températures et présenter une tenue mécanique à la pression moindre. En outre, le gaz à l'extérieur du récipient, isole thermiquement l'enceinte de la zone d'échauffement des échantillons, elle peut alors être réalisée dans un ou des matériaux aptes à tenir une pression élevée mais aptes à tenir une température plus faible que celle du récipient.

De manière très avantageuse, des moyens de régulation de la température des échantillons sont prévus dans ou sur la paroi du récipient. De préférence il s'agit de moyens de chauffage additionnel des échantillons. Ceci permet d'avoir un contrôle précis de la température des conditions d'irradiation des échantillons.

La tenue mécanique de l'enceinte dépend de la pression, de la température et de la durée d'irradiation. Selon l'invention, l'enceinte étant maintenue à une température qui n'influence pas sensiblement sa tenue mécanique grâce à l'utilisation très astucieuse du gaz ciel du fluide caloporteur dans lequel sont plongés les échantillons comme isolant thermique entre le récipient tenant la température et l'enceinte, elle peut assurer sa fonction de sûreté et le dispositif peut imposer aux échantillons des températures élevées. Ainsi, avec une structure relativement simple, on peut atteindre des températures des échantillons de l'ordre de 800°C, voire plus tout en respectant les règles de sûreté nucléaire, i.e. tout en conservant une enceinte à double enveloppe.

La présente invention a alors pour objet un dispositif pour irradier un échantillon dans le coeur ou en périphérie d'un coeur d'un réacteur nucléaire comportant,
- une enceinte à double paroi délimitant une chambre,
- un récipient contenu dans ladite chambre, ledit récipient étant maintenu à distance d'une paroi intérieure de l'enceinte, ledit récipient étant destiné à contenir un fluide caloporteur,
- un porte-échantillons dont une extrémité libre est destinée à être située dans le récipient,
dans lequel l'intérieur du récipient est en communication fluidique avec l'extérieur du récipient et dans lequel un volume entre la paroi intérieure de l'enceinte et le récipient est destiné à être rempli d'un gaz ou mélange de gaz, dit gaz ciel caloporteur.

L'enceinte peut comporter une paroi extérieure destinée à être en contact avec un fluide caloporteur du réacteur, et délimitant avec la paroi intérieure un volume de gaz.

Dans un exemple avantageux, le dispositif comporte des moyens de régulation thermique portés par le récipient.

Les moyens de régulation thermique peuvent avantageusement comporter au moins des moyens de chauffage additionnel.

Par exemple, les moyens de chauffage additionnel comportent au moins un élément chauffant sur la surface extérieure du récipient ou, de préférence, plusieurs éléments chauffants répartis sur toute ou partie de la surface extérieure du récipient.

Par exemple, les éléments chauffants sont répartis sur toute ou partie de la surface extérieure du récipient le long de l'axe longitudinal de sorte à pouvoir chauffer séparément différentes zones du récipient le long de l'axe longitudinal.

De préférence, les moyens de régulation thermique sont recouverts d'un revêtement de protection, par exemple réalisé par shoopage.

Selon une caractéristique additionnelle, le dispositif peut comporter au moins un capteur de température porté par le récipient, par exemple un thermocouple

L'intérieur du récipient peut être en communication fluidique avec l'extérieur du récipient au niveau d'une extrémité supérieure du récipient par laquelle est introduit l'échantillon dans le récipient.

Par exemple, les parois intérieure et extérieure et le récipient sont de forme tubulaire, fermées à une extrémité inférieure par un fond.

Les parois intérieure et extérieure de l'enveloppe peuvent être par exemple en Inox X2CrNiMo17-12-2 et le récipient est en Inconel^{®}718.

La présente invention a également pour objet un procédé d'irradiation d'un échantillon mettant en oeuvre un dispositif selon l'invention, comportant les étapes:
- mise en place d'au moins un échantillon dans le récipient par introduction du porte-échantillons dans le dispositif, le récipient contenant un fluide caloporteur,
- mise en place du dispositif dans le coeur ou en périphérie du coeur d'un réacteur nucléaire,
- retrait du dispositif du réacteur et retrait du au moins un échantillon du dispositif.

Dans un exemple, le caloporteur est liquide, par exemple formé par un métal liquide ou un alliage liquide, par exemple NaK ou du Na, et le gaz ciel caloporteur est situé entre l'enceinte et le récipient.

Dans un autre exemple, le caloporteur est un gaz ou un mélange de gaz.

Lors de l'irradiation un apport additionnel de chaleur à l'échantillon peut avantageusement être effectué.

### BRÈVE DESCRIPTION DES DESSINS

La présente invention sera mieux comprise à l'aide de la description qui va suivre et des dessins en annexes sur lesquels:
- la figure 1 est une vue en coupe longitudinale d'une représentation schématique d'un exemple de réalisation d'un dispositif pour l'irradiation d'échantillon selon l'invention,
- la figure 2 est une vue de détail de la figure 1,
- la figure 3A est une représentation graphique de la variation de la température au sein du dispositif en fonction du rayon du dispositif, dans le cas d'un caloporteur liquide,
- la figure 3B est une représentation graphique de la variation de la température au sein du dispositif en fonction du rayon du dispositif, dans le cas d'un caloporteur gazeux,
- la figure 4 est une représentation schématique d'un exemple de réalisation des moyens de chauffage additionnel pouvant être mis en oeuvre dans le dispositif selon l'invention,
- les figures 5A et 5B sont des représentations schématiques d'un autre exemple de réalisation des moyens de chauffage additionnel pouvant être mis en oeuvre dans le dispositif selon l'invention,
- la figure 6 est une représentation d'un exemple d'un profil de variation de l'épaisseur de la lame de gaz entre le récipient et la surface interne de l'enceinte.

### EXPOSÉ DÉTAILLÉ DE MODES DE RÉALISATION PARTICULIERS

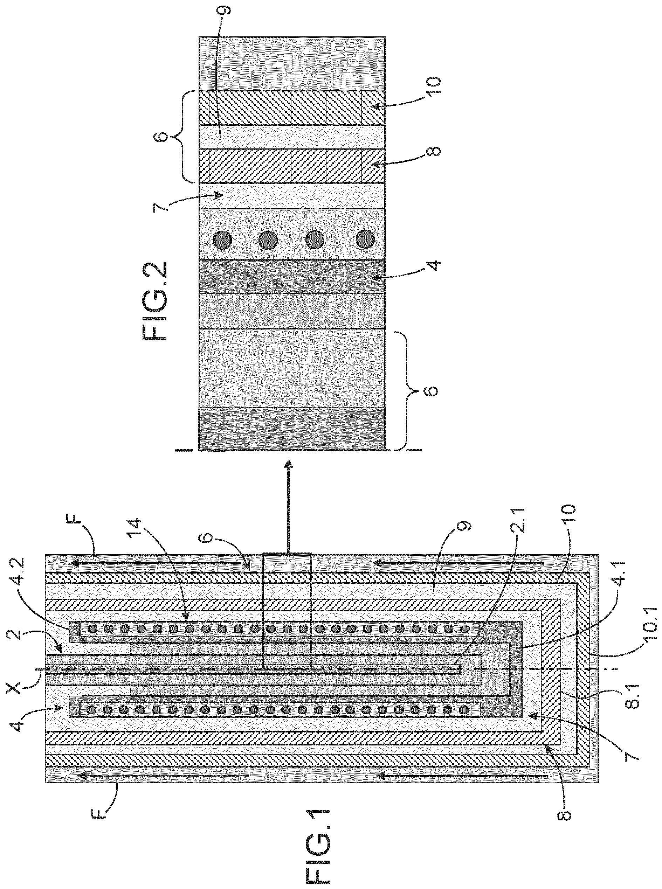

Sur la figure 1, on peut voir une représentation schématique d'un dispositif pour l'irradiation d'échantillons dans un réacteur nucléaire de recherche, plus particulièrement dans le coeur ou en périphérie du coeur d'un réacteur nucléaire de recherche.

Le dispositif pour l'irradiation et les éléments qui le composent présentent avantageusement une forme de révolution autour d'un axe longitudinal X. Le dispositif comporte plusieurs éléments concentriques de préférence tubulaire.

Le dispositif pour l'irradiation mesure plusieurs mètres de long, par exemple 5m, et comporte une portion longitudinale destinée à se situer dans la zone de flux neutronique correspondant aux assemblages combustibles du réacteur, qui s'étend par exemple sur une hauteur de 1 m.

Sur les figures 1 et 2, c'est la portion destinée à être disposée dans la zone de flux neutronique qui est représentée et qui sera décrite en détail.

Le dispositif comporte un porte-échantillons 2 d'axe X comprenant une extrémité longitudinale libre 2.1 destinée à maintenir les échantillons, cette extrémité longitudinale libre 2.1 comporte par exemple une tige filetée ou tout moyen de maintien d'une structure adaptée à la géométrie des échantillons, à leur mise en place et leur retrait. Chaque porte-échantillons est conçu pour répondre au besoin propre de l'expérience, par exemple il peut inclure des actionneurs pour la mise en contrainte des échantillons. Il comprend également différents capteurs de mesure nécessaires pour le suivi de l'expérience sous irradiation, par exemple pour mesurer la température, la pression, l'évolution des dimensions des échantillons, les flux de neutrons et de gamma, etc. Le porte-échantillons 2 peut être introduit et retiré par coulissement le long de l'axe longitudinal X pour permettre le changement d'échantillon.

Le dispositif comporte également un récipient 4 dans lequel est disposée l'extrémité longitudinale libre 2.1 du porte-échantillons lorsque les échantillons sont en place. Le récipient est destiné à contenir un fluide caloporteur dans lequel les échantillons sont plongés et par l'intermédiaire duquel les échanges thermiques sont réalisés. Le récipient comporte un fond inférieur fermé 4.1 et un fond supérieur ouvert 4.2 par lequel est introduit le porte-échantillons 2. Le fond inférieur 4.1 est par exemple soudé à la paroi latérale du récipient.

Le caloporteur assure les échanges thermiques entre les échantillons, le récipient et l'enceinte en contact avec le caloporteur du réacteur.

La distance entre le fond 4.1 du récipient et celui 8.1 de la paroi tubulaire inférieure est alors telle qu'elle permet une libre dilatation entre le réservoir et l'enceinte.

Le récipient 4 permet avantageusement de recevoir également les capteurs de mesure, par exemple les capteurs de température et/ou d'irradiation.

Le dispositif comporte également une enceinte 6 à double paroi délimitant une chambre 7 pour le récipient.

L'enceinte comporte une paroi tubulaire intérieure 8 et une paroi tubulaire extérieure 10, les deux parois étant concentriques 8, 10. Chacune des parois tubulaires 8, 10 est fermée au niveau de son extrémité inférieure par un fond inférieur 8.1, 10.1 respectivement. Par exemple, les fonds inférieurs 8.1, 10.1 sont soudés à une extrémité de chaque paroi tubulaire. La distance entre les fonds inférieurs 8.1, 10.1 est telle qu'elle permet leur libre dilatation. Le récipient est fixé par sa partie supérieure sur la paroi intérieure de l'enceinte, par un moyen mécanique adapté, la libre dilatation étant possible vers le bas.

Des moyens de centrage sont avantageusement prévus pour maintenir une lame de gaz 9 d'épaisseur sensiblement constante entre les deux parois tubulaires sur toute la hauteur de l'enceinte. Par exemple, à froid la distance entre la face intérieure de la paroi tubulaire extérieure 10 et la face extérieure de la paroi tubulaire intérieure peut être de l'ordre de 0,2 mm.

Les deux parois 8, 10 définissent entre elles un volume destiné à contenir du gaz d'enceinte.

Le volume défini entre les deux parois est clos. Le gaz peut être introduit par un piquage tubulaire de petit diamètre, par exemple d'un diamètre interne de 2 mm situé en partie haute de l'enceinte.

Lorsqu'un caloporteur liquide, tel qu'un métal liquide comme le NaK (alliage de sodium et de potassium), est mis en oeuvre et remplit le fond du récipient 4, la chambre 7 est remplie d'un gaz inerte, par exemple de l'hélium, ou un mélange de gaz compatible avec le caloporteur. En effet, la partie supérieure du récipient est remplie de ce gaz ou mélange de gaz, appelé gaz ciel caloporteur, et puisque l'intérieur du récipient est en communication avec la chambre 7 par l'extrémité supérieure du récipient, la chambre 7 est remplie de gaz ciel caloporteur.

Le caloporteur liquide peut être un métal ou des métaux liquides, tel que le Sodium, un alliage ou des alliages liquides tel que le NAK, un ou des sels, un ou des liquides organiques etc.

Dans la suite de la description, l'expression "gaz ciel supérieur" désigne un gaz ou un mélange de gaz.

Lorsqu'un caloporteur gazeux, tel que l'hélium par exemple, est mis en oeuvre dans le récipient, celui-ci remplit également la chambre 7. Le caloporteur peut être un gaz ou un mélange de gaz.

La face intérieure de la paroi tubulaire intérieure 8 est en contact avec le gaz ciel caloporteur.

La face extérieure de la paroi tubulaire extérieure 10 est en contact avec le fluide caloporteur du réacteur de recherche, par exemple de l'eau, dont la circulation est symbolisée par les flèches F.

De manière avantageuse, des moyens de régulation thermique 14 du caloporteur contenu dans le récipient, sont prévus dans la paroi du récipient ou sur la paroi du récipient. Par exemple, il s'agit de moyens de chauffage, alternativement on pourrait prévoir des moyens de refroidissement ou à la fois des moyens de chauffage et des moyens de refroidissement.

Les moyens de chauffage sont par exemple formés par des éléments chauffant par effet Joule Des exemples de réalisation des ces moyens seront décrits ci-dessous.

Les parois tubulaires 8, 10 sont réalisées dans un matériau capable de tenir des pressions élevées, par exemple de l'ordre de 16 bars pour les valeurs de diamètre données dans le tableau 1 ci-dessous.

Ils sont par exemple réalisés en acier inoxydable, en alliage de zirconium, en alliage de nickel. La paroi tubulaire intérieure 8 et la paroi tubulaire extérieure 10 peuvent être réalisées dans le même matériau ou dans des matériaux différents.

A titre d'exemple, les parois tubulaires 8, 10 peuvent être réalisées en acier inox X2CrNiMo17-12-2

Le récipient est réalisé en un matériau apte à supporter des températures élevées, par exemple de l'ordre d'au moins 800°C, avec de faible déformation, il peut s'agir d'un matériau métallique tel que des alliages de Nickel (par exemple Inconel^{®}, Incoloy^{®}), des aciers inoxydables.

Par ailleurs, des moyens de centrage sont avantageusement prévus pour garantir sur toute la hauteur de la zone chauffante, une lame de gaz régulière entre la surface extérieure du récipient et la paroi tubulaire intérieure 8 de l'enceinte du dispositif. Cette lame de gaz peut être d'épaisseur constante sur toute la hauteur du récipient ou au contraire, comporter des sections longitudinales d'épaisseurs différentes le long du récipient. Des moyens de centrage sont prévus sur la surface du récipient, ils sont de faibles dimensions pour limiter les ponts thermiques. Il peut s'agir de bossages métalliques ou de centreurs céramiques.

Nous allons maintenant expliquer le fonctionnement de ce dispositif.

Les échantillons sont fixés à l'extrémité libre 2.1 du porte-échantillon 2 qui est ensuite introduit à l'intérieur du dispositif, dans le récipient 4 qui contient le fluide caloporteur

Le dispositif est ensuite introduit dans le coeur du réacteur de recherche ou en périphérie de celui-ci. Le dispositif est alors plongé dans le fluide caloporteur du réacteur. Le dispositif est soumis aux rayonnements nucléaires (gammas et neutrons), ce qui provoque l'échauffement de différents éléments du dispositif et du caloporteur contenu dans le récipient. Les échantillons sont également chauffés. Les moyens de régulation thermique peuvent être activés par exemple pour augmenter la température de l'échantillon en chauffant le caloporteur. Celle-ci est par exemple de 800°C environ dans le cas d'un caloporteur liquide. Le matériau du récipient permet au récipient de supporter des températures élevées. Le récipient 4 est entouré de gaz ciel caloporteur.

Le gaz ciel caloporteur contenu dans la chambre 7 forme un isolant thermique entre le récipient, i.e. la zone à température élevée et la paroi tubulaire intérieure 8, ce qui permet de limiter la température vue par cette paroi tubulaire 8 et plus généralement vue par l'enceinte, la température est par exemple de l'ordre de 350°C. Par conséquent, les matériaux utilisés pour l'enceinte, bien que fragilisés par l'irradiation, conservent des propriétés mécaniques suffisantes pour que l'enceinte soit apte à supporter les contraintes mécaniques imposées par la différence de pression entre l'intérieur et l'extérieur. Ainsi il est possible d'atteindre des températures élevées au centre du dispositif pour l'échantillon tout en assurant la tenue mécanique du dispositif.

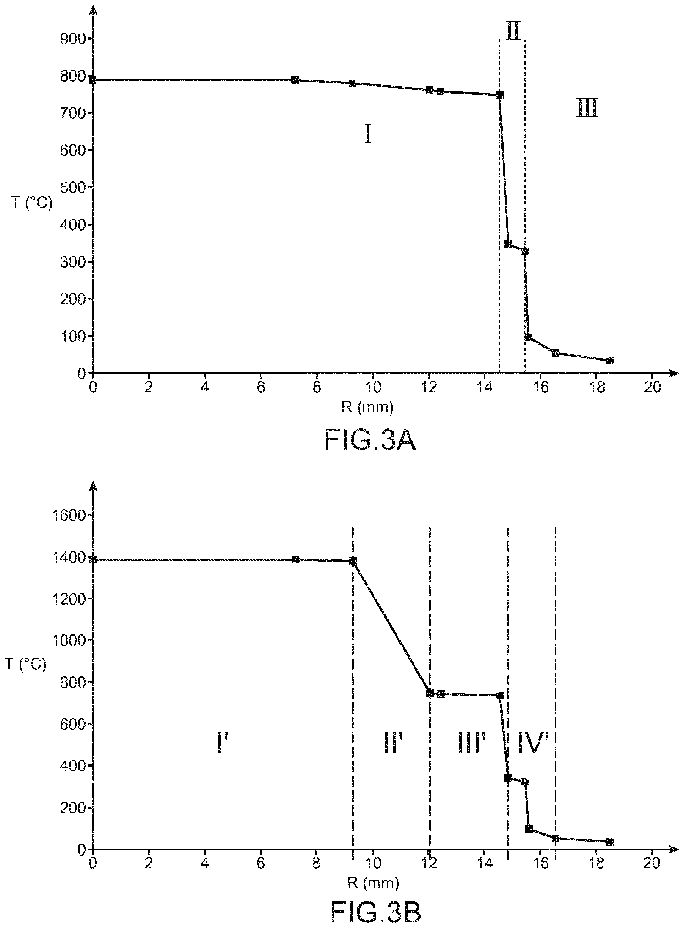

Sur les figures 3A et 3B, on peut voir des représentations graphiques de la température en °C dans le dispositif le long de son rayon R en mm, le dispositif étant sous irradiation.

Dans le cas de la figure 3A, le caloporteur est du métal liquide NaK et le caloporteur du réacteur est l'eau, pour une puissance nucléaire de 12,5W/g et une puissance électrique de 200W/cm.

On constate que dans une zone centrale désignée I de rayon inférieure à environ 14,55 mm la température est sensiblement constante et est d'environ 800°C. Entre 14,55 mm et 15,6 mm, cette zone est désignée II et correspond sensiblement au diamètre extérieur du récipient et à la paroi tubulaire interne de l'enceinte 8, la température chute dans l'espace gazeux 7, jusqu'à 350° qui correspond à la température de la paroi tubulaire intérieure 8, puis dans l'espace gazeux 9 entre les deux parois de l'enceinte, la température chute encore jusqu'à 100°C au niveau de la paroi tubulaire extérieure 10. Au-delà, la zone III à partir la paroi tubulaire 10 puis à l'extérieur de l'enceinte 4 où circule le caloporteur du réacteur, la température diminue plus lentement pour atteindre la température du caloporteur du réacteur.

Dans le cas de la figure 3B, le caloporteur est de l'hélium et le caloporteur du réacteur est l'eau, pour une puissance nucléaire de 12,5W/g et une puissance électrique de 200W/cm. Des températures encore plus élevées peuvent être obtenues en utilisant un gaz comme caloporteur puisque des températures de l'ordre de 1400°C sont atteintes au centre du dispositif (Zone I').

On constate que dans une zone centrale correspondant aux échantillons, désignée I' de rayon inférieure à environ 9,3 mm la température est sensiblement constante et est d'environ 1400°C. Puis entre 9,3 mm et 12 mm, la zone II' correspond à la chute de température dans le caloporteur gaz à l'intérieur du récipient. Dans le récipient (zone III'), entre 12 mm et 14,6 mm la température reste constante autour de 750°C, puis chute dans l'espace gazeux 7. Dans l'enceinte (zone IV') entre 14,9 mm et 16,6 mm, la paroi tubulaire interne 8 est à 350°C environ, puis dans l'espace gazeux 9 la température chute encore jusqu'à 100°C au niveau de la paroi tubulaire extérieure 10. Au-delà, la température diminue lentement pour atteindre à l'extérieur de l'enceinte 4 la température du caloporteur du réacteur.

Le gaz caloporteur est beaucoup moins conducteur que le caloporteur NaK, les échanges thermiques se font moins bien, ce qui permet d'atteindre une température des échantillons plus élevée que dans le cas du NaK. Par ailleurs, la chute de température est plus marquée dans le caloporteur gaz que dans le NaK, ce qui explique la différence de profil entre les courbes des figures 3A et 3B.

On peut alors constater l'efficacité du dispositif selon l'invention puisque les températures auxquelles est soumise l'enceinte correspondent aux températures auxquelles ses propriétés mécaniques sont conservées.

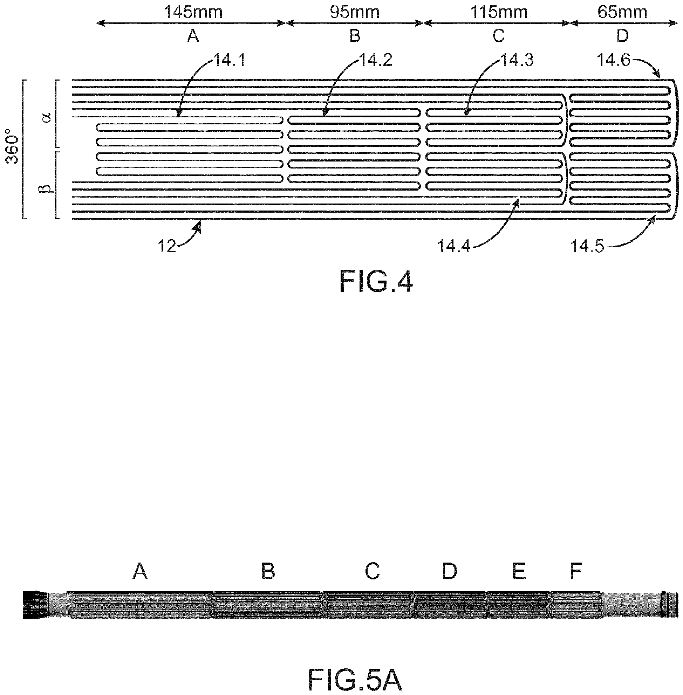

Sur les figures 4 et 5A-5B, on peut voir des exemples de réalisation des moyens de régulation thermiques formés par des moyens de chauffage. Ceux-ci sont représentés à plat.

Sur la figure 4, les moyens de chauffage comportent des éléments chauffants sous forme filaire, dans l'exemple représenté six fils chauffants distincts désignés 14.1 à 14.6. Les fils comportent leurs extrémités d'alimentation situées toutes au niveau d'une même extrémité du récipient, de préférence l'extrémité supérieure pour leur connexion à une source de courant. Chaque fil serpente sur la surface extérieure du récipient de sorte à recouvrir uniformément toute ou partie de la hauteur du récipient ainsi que tout ou partie de son périmètre. Les éléments chauffants sont répartis sur la hauteur du récipient de sorte à définir six zones de chauffage réparties axialement. Ces six zones peuvent être contrôlées séparément. Les zones axiales C et D comportent chacune deux éléments chauffants 14.3 et 14.4, et 14.5 et 14.6 respectivement. De préférence, les éléments chauffants 14.3 et 14.4 sont contrôlés de sorte à avoir un chauffage homogène de la zone C, et les éléments chauffants 14.5 et 14.6 sont contrôlés de sorte à avoir un chauffage homogène de la zone D.

En variante, un seul fil chauffant couvrant toute la hauteur et toute la périphérie du récipient pourrait être mis en oeuvre. Un nombre quelconque de fils chauffants peut être mis en oeuvre. En outre, des fils chauffants s'étendant sur toute la hauteur du récipient mais ne couvrant qu'une portion angulaire de la périphérie du récipient ne sortent pas du cadre de la présente invention. La mise en oeuvre de plusieurs zones indépendantes permet de moduler l'apport de chaleur suivant les gradients d'échauffement nucléaires axiaux et radiaux. En outre, en mettant en oeuvre un seul élément, il serait plus difficile d'apporter toute la puissance voulue. Par ailleurs, en mettant en oeuvre plusieurs éléments, si l'un deux est défectueux, il est toujours possible d'apporter de la chaleur.

Tout moyen de chauffage additionnel compatible avec la géométrie, le milieu nucléaire, le caloporteur peut être mis en oeuvre, par exemple un moyen de chauffage par induction, par tube résistif...

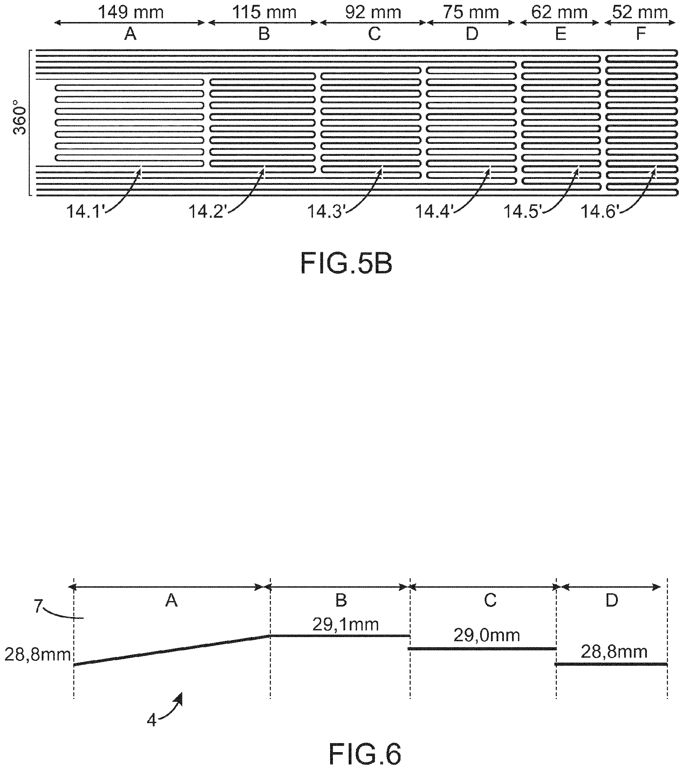

Sur la figure 5A, on peut voir une autre réalisation des moyens de chauffage comportant également six fils mais répartis différemment. Sur la figure 5B, on peut voir une vue de côté le récipient comportant les moyens de chauffage de la figure 5A. Les six éléments chauffants 14.1' à 14.6' sont répartis suivant les six zones axiales A à F.

Par exemple la surface extérieure du récipient est usinée afin de servir de support aux fils chauffants. Par exemple, les fils sont du type monofilaire, et comportent une âme en nickel chrome 80/20 pour la partie destinée à être échauffée par effet Joule, un isolant minéral en MgO et une gaine en Inconel^{®}600. L'usinage consiste par exemple à réduire le diamètre extérieur du récipient et/ou à réaliser des gravures pour recevoir les fils.

De manière avantageuse, des capteurs de température, par exemple des thermocouples, sont également prévus sur la surface extérieure du récipient afin de contrôler la température du dispositif.

De préférence, les moyens de chauffage et les capteurs de températures le cas échéant sont recouverts d'un revêtement pour les protéger. Ce revêtement permet de transférer plus efficacement la puissance apportée par les éléments chauffants au récipient tout en limitant l'élévation de température des éléments chauffants afin d'éviter de les endommager. Par exemple une fine couche de céramique (par exemple par shoopage qui sera décrit ci-dessous) peut être formée sur le métal recouvrant les éléments chauffants.

Ce revêtement peut également offrir une surface pouvant être rectifiée de sorte à maîtriser le diamètre extérieur.

Par exemple, les fils du ou des éléments chauffants sont disposés sur la surface extérieure du récipient sans gravure et sont recouverts.

Le diamètre des fils est tel que le diamètre final du récipient est compatible avec l'enceinte qui l'accueille et l'espace gazeux les séparant.

Le revêtement est choisi de sorte à assurer l'enrobage des éléments chauffants et des capteurs de température et à présenter une porosité limitée et à éviter l'oxydation du métal. Cet enrobage est réalisé par exemple par métallisation, de manière avantageuse, le revêtement est réalisé par un enrobage en alliage Nickel de type Inconel^{®}. En variante, le revêtement peut être en cuivre.

Ce revêtement peut être réalisé par projection thermique, également désignée shoopage. Une réalisation par moulage est également envisageable.

Le shoopage est bien connu de l'homme du métier. Il s'agit d'un traitement de surface par voie sèche obtenu par projection thermique. Le shoopage regroupe plusieurs procédés qui ont pour point commune de fondre un matériau d'apport puis de le projeter sous forme de gouttelettes grâce à un gaz vecteur. Le dépôt est formé par un empilement successif de gouttelettes de matériau fondu ou à l'état pâteux, ce qui conduit à une structure lamellaire. L'adhérence du revêtement est obtenue essentiellement par un phénomène mécanique et la surface des pièces est préalablement préparée pour en augmenter la rugosité et favoriser l'accrochage.

Après formation de ce revêtement sur la surface extérieure du récipient, un recuit de stabilisation peut-être avantageusement réalisé. Le revêtement ainsi formé est ensuite usiné suivant un diamètre constant ou selon un profil variable axialement afin d'avoir une épaisseur de gaz entre le récipient 4 et l'enceinte 6 non constante, un exemple de profil d'épaisseur variable est représenté schématiquement sur la figure 6. Les valeurs numériques indiquées sont des exemples du diamètre extérieur du récipient. Ce profil variable permet avantageusement de moduler les échanges thermiques axialement. La variation d'épaisseur du gaz correspond de préférence sensiblement aux zones ABCD des éléments chauffants, comme on peut le voir par comparaison avec la figure 4.

Au-dessus de la zone de chauffage, le cheminement des câbles des éléments chauffants et thermocouples se fait dans l'espace gazeux entre le récipient 4 et l'enceinte 6.

A titre d'exemple non limitatif, nous allons donner des valeurs de dimensionnement d'un exemple de dispositif pour l'irradiation selon l'invention.

L'enceinte double enveloppe est formée de deux parois tubulaires en inox X2CrNiMo17-12-2.

Les valeurs des diamètres interne et externe sont mentionnées dans le Tableau 1

**Tableau 1**

| | **Diamètre interne (mm)** | **Diamètre externe (mm)** |
|---|---|---|
| **Cloison tubulaire intérieure** | 29,7 | 30,9 |
| **Cloison tubulaire extérieure** | 31,2 | 33,1 |

Le récipient est par exemple en Inconel^{®} 718. Il a pour longueur 1 m environ, pour diamètre interne 24,1 mm et pour diamètre externe 25,3 mm.

Sur environ 700 mm, la face latérale extérieure du récipient 2 est usinée au diamètre externe de 24,9 mm afin de servir de support à six éléments chauffants (EC). Les éléments chauffants sont de type monofilaire nickel chrome 80/ avec isolant minéral MgO et gaine en Inconel^{®} 600. Dans les exemples donnés, les éléments chauffants permettent d'augmenter la température d'environ 150°C dans le cas du caloporteur NaK, et d'environ75°C pour celui du caloporteur gaz.

L'espace axial entre les zones chauffantes A à D est de l'ordre de 10 mm.

Les six éléments chauffants ont une longueur chauffante de 1500 mm et un diamètre de 1mm. Douze thermocouples type K de diamètre 1 mm sont placés dans les zones chauffantes. La hauteur de chauffage est de l'ordre de 450 mm.

Après recuit de stabilisation, le revêtement de métal obtenu par shoopage est usiné suivant un diamètre constant, dans le cas décrit: 29,1 mm. Le revêtement recouvre tous les éléments chauffants et se prolonge de part et d'autre des éléments chauffants, par exemple sur quelques centimètres.

Par exemple le récipient est capable de tenir une température de l'ordre de 800°C tandis que les enveloppes de l'enceinte peuvent être réalisées pour tenir une température de l'ordre de 450°C et par exemple une pression de 16 bars pour les diamètres données dans le tableau 1.

Il sera compris qu'au vu de la très grande longueur du dispositif au regard de ses dimensions transversales, un soin particulier est apporté à la réalisation des parois tubulaires intérieure et extérieure et du récipient afin d'obtenir une très bonne concentricité et des épaisseurs du film de gaz dans l'enceinte et du film de gaz entre le récipient est l'enceinte maîtrisées.

Le dispositif pour l'irradiation est de structure relativement simple et permet d'imposer des températures très élevées aux échantillons tout en respectant les règles de sûreté.

## Revendications

1. Dispositif pour irradier un échantillon dans le coeur ou en périphérie d'un coeur d'un réacteur nucléaire comportant,
- une enceinte (6) à double paroi délimitant une chambre (7),
- un récipient (4) contenu dans ladite chambre (7), ledit récipient (4) étant maintenu à distance d'une paroi intérieure (8) de l'enceinte, ledit récipient (4) étant destiné à contenir un fluide caloporteur,
- un porte-échantillons (2) dont une extrémité libre est destinée à être située dans le récipient (4),
dans lequel l'intérieur du récipient est en communication fluidique avec l'extérieur du récipient et dans lequel un volume entre la paroi intérieure (8) de l'enceinte (6) et le récipient (4) est destiné à être rempli d'un gaz ou mélange de gaz, dit gaz ciel caloporteur.

2. Dispositif selon la revendication 1, dans lequel l'enceinte comporte une paroi extérieure (10) destinée à être en contact avec un fluide caloporteur du réacteur, et délimitant avec la paroi intérieure (8) un volume (9) de gaz.

3. Dispositif selon la revendication 1 ou 2, comportant des moyens de régulation thermique (14) portés par le récipient (4).

4. Dispositif selon la revendication 3, dans lequel les moyens de régulation thermique comportent au moins des moyens de chauffage additionnel.

5. Dispositif selon la revendication 4, dans lequel les moyens de chauffage additionnel comportent au moins un élément chauffant (14.1, 14.2, 14.3, 14.4, 14.5, 14.6) sur la surface extérieure du récipient (4).

6. Dispositif selon la revendication 4 ou 5, dans lequel les moyens de chauffage additionnel comportent plusieurs éléments chauffants (14.1, 14.2, 14.3, 14.4, 14.5, 14.6) répartis sur toute ou partie de la surface extérieure du récipient (4).

7. Dispositif selon la revendication 6, dans lequel les éléments chauffants (14.1, 14.2, 14.3, 14.4, 14.5, 14.6) sont répartis sur toute ou partie de la surface extérieure du récipient le long de l'axe longitudinal (X) de sorte à pouvoir chauffer séparément différentes zones du récipient (4) le long de l'axe longitudinal (X).

8. Dispositif selon l'une des revendications 3 à 7, dans lequel les moyens de régulation thermique (14) sont recouverts d'un revêtement de protection, par exemple réalisé par shoopage.

9. Dispositif selon l'une des revendications 1 à 8, comportant au moins un capteur de température porté par le récipient, par exemple un thermocouple.

10. Dispositif selon l'une des revendications 1 à 9, dans lequel l'intérieur du récipient (4) est en communication fluidique avec l'extérieur du récipient au niveau d'une extrémité supérieure (4.2) du récipient par laquelle est introduit l'échantillon dans le récipient (4).

11. Dispositif selon l'une des revendications 1 à 10, dans lequel les parois intérieure (8) et extérieure (10) et le récipient (4) sont de forme tubulaire, fermées à une extrémité inférieure par un fond.

12. Procédé d'irradiation d'un échantillon mettant en oeuvre un dispositif selon l'une des revendications 1 à 11, comportant les étapes
- mise en place d'au moins un échantillon dans le récipient (4) par introduction du porte-échantillons (2) dans le dispositif, le récipient (4) contenant un fluide caloporteur,
- mise en place du dispositif dans le coeur ou en périphérie du coeur d'un réacteur nucléaire,
- retrait du dispositif du réacteur et retrait du au moins un échantillon du dispositif.

13. Procédé d'irradiation selon la revendication 12, dans lequel le caloporteur est liquide, par exemple formé par un métal liquide ou un alliage liquide, par exemple du NaK ou du Na, et le gaz ciel caloporteur est situé entre l'enceinte et le récipient,

14. Procédé d'irradiation selon la revendication 12, dans lequel le caloporteur est un gaz ou un mélange de gaz.

15. Procédé d'irradiation selon l'une des revendications 12 à 14, dans lequel lors de l'irradiation un apport additionnel de chaleur à l'échantillon est effectué.

## Patentansprüche

1. Vorrichtung zum Bestrahlen einer Probe im Kern oder in der Peripherie eines Kerns eines Kernreaktors, enthaltend
- einen Sicherheitsbehälter (6) mit Doppelwandung, der eine Kammer (7) eingrenzt,
- ein in der Kammer (7) enthaltenes Gefäß (4), wobei das Gefäß (4) auf Abstand von einer Innenwandung (8) des Sicherheitsbehälters gehalten wird, wobei das Gefäß (4) dazu bestimmt ist, ein Wärmeträgermedium zu beinhalten,
- einen Probenhalter (2), von dem ein freies Ende dazu bestimmt ist, in dem Gefäß (4) zu liegen,
wobei der Innenbereich des Gefäßes in Strömungsverbindung mit dem Außenbereich des Gefäßes ist und ein Volumen zwischen der Innenwandung (8) des Sicherheitsbehälters (6) und dem Gefäß (4) dazu bestimmt ist, mit einem Gas oder Gasgemisch, Wärmeträgerdeckgas genannt, gefüllt zu werden.

2. Vorrichtung nach Anspruch 1, wobei der Sicherheitsbehälter eine Außenwandung (10) enthält, die dazu bestimmt ist, mit einem Wärmeträgerfluid des Reaktors in Kontakt zu stehen, und die mit der Innenwandung (8) ein Gasvolumen (9) eingrenzt.

3. Vorrichtung nach Anspruch 1 oder 2, enthaltend thermische Regulierungsmittel (14), die von dem Gefäß (4) getragen werden.

4. Vorrichtung nach Anspruch 3, wobei die thermischen Regulierungsmittel zumindest zusätzliche Heizmittel enthalten.

5. Vorrichtung nach Anspruch 4, wobei die zusätzlichen Heizmittel zumindest ein Heizelement (14.1, 14.2, 14.3, 14.4, 14.5, 14.6) an der Außenfläche des Gefäßes (4) enthalten.

6. Vorrichtung nach Anspruch 4 oder 5, wobei die zusätzlichen Heizmittel mehrere Heizelemente (14.1, 14.2, 14.3, 14.4, 14.5, 14.6) enthalten, die über die gesamte Außenfläche des Gefäßes (4) oder über einen Teil davon verteilt sind.

7. Vorrichtung nach Anspruch 6, wobei die Heizelemente (14.1, 14.2, 14.3, 14.4, 14.5, 14.6) über die gesamte Außenfläche des Gefäßes oder über einen Teil davon entlang der Längsachse (X) verteilt sind, so dass die verschiedenen Bereiche des Gefäßes (4) entlang der Längsachse (X) separat erwärmt werden können.

8. Vorrichtung nach einem der Ansprüche 3 bis 7, wobei die thermischen Regulierungsmittel (14) mit einer Schutzbeschichtung bedeckt sind, die beispielsweise durch Metallisierung ("shoopage") hergestellt ist.

9. Vorrichtung nach einem der Ansprüche 1 bis 8, enthaltend zumindest einen Temperatursensor, der von dem Gefäß getragen wird, beispielsweise ein Thermoelement.

10. Vorrichtung nach einem der Ansprüche 1 bis 9, wobei der Innenbereich des Gefäßes (4) im Bereich eines oberen Endes (4.2) des Gefäßes, über das die Probe in das Gefäß (4) eingeführt wird, mit dem Außenbereich des Gefäßes in Strömungsverbindung steht.

11. Vorrichtung nach einem der Ansprüche 1 bis 10, wobei die Innenwandung (8) und die Außenwandung (10) und das Gefäß rohrförmig ausgebildet und an einem unteren Ende mit einem Boden verschlossen sind.

12. Verfahren zum Bestrahlen einer Probe, bei dem eine Vorrichtung nach einem der Ansprüche 1 bis 11 Anwendung findet, umfassend die nachfolgenden Schritte:
- Einsetzen zumindest ein Probe in das Gefäß (4) durch Einführen des Probenhalters (2) in die Vorrichtung, wobei das Gefäß (4) ein Wärmeträgermedium beinhaltet,
- Einsetzen der Vorrichtung in den Kern oder in die Peripherie des Kerns eines Kernreaktors,
- Entfernen der Vorrichtung aus dem Reaktor und Entfernen der zumindest einen Probe aus der Vorrichtung.

13. Bestrahlungsverfahren nach Anspruch 12, wobei das Wärmeträgermedium flüssig ist, beispielsweise aus einem flüssigen Metall oder einer flüssigen Legierung gebildet ist, beispielsweise aus NaK oder Na, und das Wärmeträgerdeckgas sich zwischen dem Sicherheitsbehälter und dem Gefäß befindet.

14. Bestrahlungsverfahren nach Anspruch 12, wobei das Wärmeträgermedium ein Gas oder ein Gasgemisch ist.

15. Bestrahlungsverfahren nach einem der Ansprüche 12 bis 14, wobei bei der Bestrahlung eine zusätzliche Wärmezufuhr zur Probe erfolgt.

## Claims

1. Device to irradiate a sample in the core or at the periphery of the core of a nuclear reactor comprising,
- a double wall containment (6) delimiting a chamber (7),
- a receptacle (4) contained in said chamber (7), said receptacle (4) being held at a distance from an inside wall (8) of the containment, said receptacle (4) being designed to contain a coolant,
- a sample holder (2), a free end of which being configured to be located in the receptacle (4),
in which the inside of the receptacle is in fluid communication with the outside of the receptacle and in which a volume between the inside wall (8) of the containment (6) and the receptacle (4) is configured to be filled with a gas or a mix of gases called the coolant cushion gas.

2. Device according to claim 1, in which the containment has an outside wall (10) that is configured to be in contact with a coolant of the reactor, and delimiting a gas volume (9) with the inside wall (8).

3. Device according to claim 1 or 2, comprising thermal regulation means (14) installed on the receptacle (4).

4. Device according to claim 3, in which the thermal regulation means comprise at least additional heating means.

5. Device according to claim 4, in which the additional heating means comprise at least one heating element (14.1, 14.2, 14.3, 14.4, 14.5, 14.6) on the outside surface of the receptacle (4).

6. Device according to claim 4 or 5, in which the additional heating means comprise several heating elements (14.1, 14.2, 14.3, 14.4, 14.5, 14.6) distributed over all or part of the outside surface of the receptacle (4).

7. Device according to claim 6, in which the heating elements (14.1, 14.2, 14.3, 14.4, 14.5, 14.6) are distributed over all or part of the outside surface of the receptacle along the longitudinal axis (X) such that the different zones of the receptacle (4) along the longitudinal axis (X) can be heated separately.

8. Device according to one of claims 3 to 7, in which the thermal regulation means (14) are coated with a protective coating, for example a sprayed-on process

9. Device according to one of claims 1 to 8, comprising at least one temperature sensor installed on the receptacle, for example a thermocouple.

10. Device according to one of claims 1 to 9, in which the inside of the receptacle (4) is in fluid communication with the outside of the receptacle at a top end (4.2) of the receptacle through which the sample is inserted into the receptacle (4).

11. Device according to one of claims 1 to 10, in which the inside wall (8) and the outside wall (10) and the receptacle (4) are tubular in shape and are closed at a lower end by a bottom.

12. Method of irradiating a sample making use of a device according to one of claims 1 to 11, comprising the following steps
- put at least one sample into position in the receptacle (4) by inserting the sample holder (2) in the device, the receptacle (4) containing a coolant fluid,
- put the device into position in the core or at the periphery of the core of a nuclear reactor,
- remove the device from the reactor and remove the at least one sample from the device.

13. Irradiation method according to claim 12, in which the coolant is a liquid, for example it is a liquid metal or a liquid alloy, for example NaK or Na, and the coolant cushion gas is located between the containment and the receptacle,

14. Irradiation method according to claim 12, in which the coolant is a gas or a mix of gases.

15. Irradiation method according to one of claims 12 to 14, in which additional heat is input into the sample during irradiation.
